# NEUE EUROPÄISCHE PATENTSCHRIFT

(11) **EP 0 360 826 B2**
(45) Veröffentlichungstag und Bekanntmachung des Hinweises auf die Entscheidung über den Einspruch: **27.07.1994**
(45) Hinweis auf die Patenterteilung: 22.01.1992
(21) Anmeldenummer: 88904922.7
(22) Anmeldetag: 13.06.1988
(51) Int. Cl.: F02D 41/26, G06F 11/20

(54) **VORRICHTUNG ZUR STEUERUNG VON TECHNISCHEN ANLAGEN UND MASCHINEN**
DEVICE FOR CONTROLLING TECHNICAL INSTALLATIONS AND MACHINES
DISPOSITIF DE COMMANDE D'EQUIPEMENTS TECHNIQUES ET DE MACHINES

(30) Priorität: 11.07.1987 DE 3723024
(43) Veröffentlichungstag der Anmeldung: 04.04.1990
(73) Patentinhaber: ROBERT BOSCH GMBH, 70442 Stuttgart (DE)
(72) Erfinder: KIENLE, Karin, D-7252 Weil der Stadt 5 (DE)
(86) Internationale Anmeldenummer: DE8800352
(87) Internationale Veröffentlichungsnummer: WO8900641

(56) Entgegenhaltungen:
- DE-A- 3 233 791
- DE-A- 3 407 920
- DE-A- 3 407 920
- DE-A- 3 543 996
- GB-A- 2 120 410
- Patent Abstracts of Japan, Vol. 10, No. 115 (M-474) (2172) 30. April 1986 & JP,A,60244650 (NIHON DENSHI KIKI K.K.) 04. December 1985
- IBM Technical Disclosure Bulletin, Vol.15, No. 10, March 1973 (New York, US) A. Weinberger"Dynamic configuration" pages 3052-3055

## Beschreibung

Die Erfindung geht aus von einem Verfahren zur Steuerung von Brennkraftmaschinen in Kraftfahrzeugen nach der Gattung des Hauptanspruchs.

Eine solche Steuerung ist aus.der DE-OS 35 43 996 bekannt. Sie weist mindestens einen frei programmierbaren Speicher und mindestens einen fest programmierten Speicher auf. In dem fest programmierten Speicher sind mehrere Varianten von Datensätzen und verschiedenen Kennungen abgelegt und in den frei programmierbaren die verschiedenen Kennungen der Datensätze. Soll eine derartige Steuerung für verschiedene Zwecke, beispielsweise in verschiedenen Fahrzeugtypen verwendet werden, so können durch verschiedene, in den frei programmierbaren Speicher eingebbare Kennungen, unterschiedliche Datensätze aus dem fest programmierten Speicher ausgelesen werden. Die Anzahl der verschiedenen Datensätze ist hierbei jedoch eingeschränkt. Es ist für den Verwender des Steuergerätes nicht möglich, die Datensätze auf einfache Weise zu ändern. Es müßte hierzu das Steuergerät oder zumindest den frei programmierbaren Speicher ausgetauscht werden.

Bei einer weiteren, aus der DE-OS 34 07 920 bekannten Steuerung sind in einem fest programmierten Speicher die Basisprogramme zur Berechnung verschiedener Steuerbefehle sowie ein Programm zur Selektion der bei den Berechnungen erforderlichen Daten gespeichert In einem frei programmierbaren Speicher ist für die zu steuernde Maschine bzw. für ein Fahrzeug ein spezifischer Datensatz mit den zugehörigen Kennungen abgelegt. Die Daten werden zusammen mit den Kennungen vom Hersteller in das Steuergerät eingegeben. Nur er kann - bei Bedarf - die Adressen im frei programmierbaren Speicher ändern und gegebenenfalls Daten ergänzen. Der Verwender einer solchen Steuerung ist an den Datensatz des Herstellers zunächst gebunden und die Änderungsmöglichkeiten sind beschränkt. Überdies muß bei allen Änderungen die Hilfe des Herstellers in Anspruch genommen werden. Nach der Änderung der Daten und/oder Adressen liegt dem Anwender wiederum nur ein einziger Datensatz vor.

Aus IBM Technical Disclosure Bulletin Vol. 15, Nr. 10, 3.73 Seite 3052 bis 3055 ist es bekannt, defekte Zellenbereiche von der weiteren Programmierung auszunehmen und zu sperren. Hierdurch soll eine Verwendung defekter Zellen von Speichern bei der Programmierung von Daten vermieden werden.

### Vorteile der Erfindung

Das erfindungsgemäße Verfahren mit den kennzeichnenden Merkmalen des Hauptanspruchs hat demgegenüber den Vorteil, daß der Verwender selbst neue Datensätze eingeben kann und nicht von vornherein an vom Herstellervorgegebene Daten gebunden ist. Der Hersteller des Steuergerätes gibt lediglich die Funktionsprogramme vor, also die Berechnungsprogramme und das Programm zur Selektion von Daten. Dem Anwender des Steuergerätes steht es nunmehr frei, Daten und Adressen zu verwenden, die vom Hersteller des Steuergerätes bereits vorgegeben sind,oder aber selbst Adressen und zugehörige Daten einzulesen, wobei hierzu lediglich freie Speicherplätze benutzt werden. Dadurch ergeben sich wesentlich mehr Möglichkeiten der Verwendung eines derartigen Verfahrens. Besonders vorteilhaft ist, daß beispielsweise Verbesserungen für die Steuerung von Brennkraftmaschinen auch nachträglich ohne Öffnen des Steuergerätes oder Austausch von Steuergerätebausteinen möglich sind.

Besonders vorteilhaft ist, daß der Adresszeiger für aktualisierte Daten, Felder und/oder Kennlinien in die dem ursprünglichen Adressensatz folgende Adressengruppe des Adresszeigers eingelesen werden. Durch diese Maßnahme wird erreicht, daß ein einfaches Programm jederzeit in der Lage ist, den entsprechenden Adresszeiger zu suchen, da er lediglich die folgende Adressengruppe aufsuchen muß. Hier sind die Adressen niedergelegt, die zu den aktualisierten Daten führen. Die Adresszeigersuche gestaltet sich dann besonders einfach, wenn die im Adresszeiger abgelegten Adressen durchsucht werden, und der Adresszeiger genommen wird, der der letzte einer Gruppe von Adresszeigem darstellt. In diesem Fall gestaltet sich die Adresszeigersuche sowohl vom programmtechnischen Aufwand als auchvon der Zeit her gesehen besonders einfach.

Durch die in dem Unteranspruch gekennzeichneten Merkmale sind vorteilhafte Weiterbildungen und Verbesserungen des im Hauptanspruch angegebenen Verfahrens möglich.

Vorteilhaft ist es weiterhin, daß bei der Programmierung bei einem Fehler beim Einlesen der Daten, Felder und/oder Kennlinien der Einlesevorgang unterbrochen wird und stattdessen ein weiteres Einlesen auf noch freie Speicherplätze vorgenommen wird und als letztes der Adressenzeiger eingegeben wird. Durch diese Maßnahme wird verhindert, daß fehlerhafte Speicherplätze beschrieben werden, und daß nur ordnungsgemäß arbeitende Speicherplätze mit neuen Daten versehen werden.

### Zeichnung

Ein Ausführungsbeispiel der Erfindung wird anhand der Zeichnung näher erläutert. Es zeigen:
Figur 1 ein Blockschaltbild eines erfindungsgemäßen Steuergeräts und
Figur 2 die Struktur der im Steuergerät abgelegten Informationen.

### Beschreibung des Ausführungsbeispiels

Vorrichtung und Verfahren gemäß der Erfindung sind zur Steuerung beliebiger technischer Anlagen und Maschinen geeignet. Die Beschreibung bezieht sich nur beispielshaft auf die Steuerung einer Brennkraftmaschine eines Kraftfahrzeugs.

Bei der Steuerung der hier beschriebenen Art handelt es sich also um eine elektronische Motorsteuerung mit mindestens einem Mikroprozessor, zumindest einem fest programmierten Speicher und wenigstens einem frei programmierbaren Speicher. Diese Steuergeräte werden bei der Herstellung eines Fahrzeugs an geeigneter Stelle eingebaut. Dabei sind die Steuergeräte für verschiedene Fahrzeugtypen und -ausführungen identisch. Sie enthalten zunächst lediglich Berechnungsprogramme, beispielsweise für verschiedene Motorsteuerungsdaten wie den Zündwinkel und die Zündwinkelkorrektur sowie ein Programm zur Selektion der für die Berechnungsprogramme erforderlichen Daten. Diese sogenannten Basisprogramme sind in dem fest programmierten Speicher des Steuergeräts abgelegt. Am Ende eines Kraftfahrzeugmontagebands kann der Verwender des Steuergeräts, der Kraftfahrzeughersteller, die fahrzeugspezifischen Daten in den frei programmierbaren Speicher des Steuergeräts eingeben. Dazu braucht das zum Schutz gegen äußere Einflüsse hermetisch abgeschlossene Steuergerät nicht geöffnet zu werden.

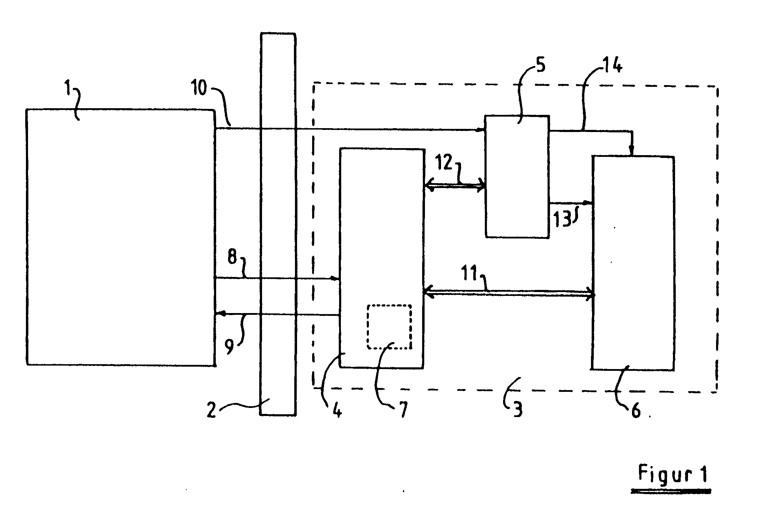

Zur Eingabe der gewünschten Informationen in den frei programmierbaren Speicher wird das Steuergerät, wie in Figur 1 dargestellt, über eine Steckverbindung mit einer Programmiereinrichtung, einer sog. Programmierstation verbunden. In der Programmierstation sind die für den Fahrzeugtyp relevanten Daten enthalten.

Figur 1 zeigtein Blockschaltbild, in dem eine Programmiereinrichtung 1 über eine Steckverbindung 2 mit einem Steuergerät 3 verbunden ist. Das Steuergerät kann zur Steuerung und/oder Regelung verschiedener Funktionen herangezogen werden, beispielsweise zur Zündzeitpunktregelung, Schließwinkelregelung und zur Regelung der Einspritzdauer. Es kann aber auch diverse Überwachungsfunktionen übemehmen. Zur Vereinfachung der Darstellung sind die Verbindungen des Steuergeräts zu Sensoren und Stellgliedem des Kraftfahrzeugs nicht wiedergegeben. Weiterhin sind Details des Gehäuses des Steuergeräts nicht dargestellt. Vorzugsweise ist aber die Steckverbindung zur Gewährleistung eines hermetischen Abschlusses in das Gehäuse integriert.

Das Steuergerät 3 weist einen Mikroprozessor4, eine Programmierschaltung 5 sowie einen frei programmierbaren Speicher 6, beispielsweise einen EPROM, auf. In den Mikroprozessor4 ist ein hier nur angedeuteter fest programmierter Speicher 7, z. B. ein ROM, integriert.

Von der Programmiereinrichtung 1 führt eine Sendeleitung 8 zu dem Mikroprozessor 4 und von diesem eine Quittierleitung 9 zurück zur Programmierstation 1, die außerdem über eine Freigabeleitung 10 mit der Programmierschaltung 5 verbunden ist. Diese drei Leitungen führen alle über die Steckverbindung 2. Zwischen dem Mikroprozessor und dem frei programmierbaren Speicher 6 ist ein erster Datenbus 11 vorgesehen. Ein zweiter Datenbus 12 dient zur Steuersignalübermittlung vom Mikroprozessor zur Programmierschaltung 5, die über eine erste Leitung 13 und eine zweite Leitung 14 mit dem Speicher6verbunden ist. Es ist auch möglich, allegenannten Bauteile des Steuergeräts in einer Schaltung zu integrieren.

Die Programmiereinrichtung 1 enthält alle fahrzeugspezifischen Daten, die über die Steckvorrichtung 2 dem Steuergerät 3 eingegeben werden.

Das Verfahren der Datenübermittlung von einer Programmiereinrichtung an ein Steuergerät mit einem Mikroprozessor, bei dem auch eine serielle oder parallele Schnittstelle vorgesehen werden kann, ist grundsätzlich bekannt.

Über die Sendeleitung 8 werden dabei Informationen an den Mikroprozessor abgegeben, der den Empfang über die Quittierleitung 9 bestätigt. Zwischen Programmiereinrichtung und Steuergerät besteht also zur Datenübermittlung ein sog. Zweidrahtdialog. Der für den normalen Betrieb nötige Datenaustausch zwischen Mikroprozessor und Speicher 6 erfolgt über den ersten Datenbus 11. Bei der Eingabe von Daten werden die über die Sendeleitung 8 eingegebenen Informationen über den ersten Datenbus 11 an den Speicher angelegt. Über den zweiten Datenbus 12 werden die zur Programmierung benötigten Steuersignale an die Programmierschaltung 5 gesendet.

Zum Programmieren des Speichers 6 wird über die Freigabeleitung 10 eine für den Speicher 6 geeignete Programmierspannung an die Programmierschaltung 5 gelegt. Diese leitet gleichzeitig über die erste Leitung 13 die Programmierimpulse und über die zweite Leitung 14 die Programmierspannung an den Speicher 6 weiter.

Es ist im übrigen aber auch möglich, anstelle der Zweidrahtschnittstelle eine Eindrahtschnittstelle zu verwenden.

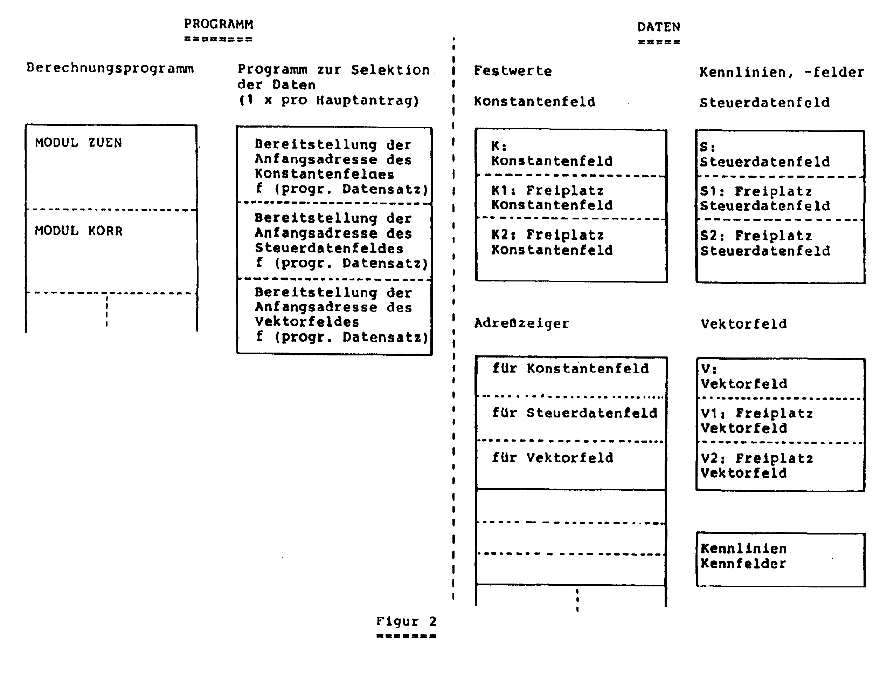

In Figur 2 sind die im fest programmierten Speicher 7 eingegebenen Programme und die im frei programmierbaren Speicher 6 abgelegten Daten dargestellt. Die Programme sind vom Hersteller des Steuergeräts vorgegeben. Die im frei programmierbaren Speicher 6 vorhandenen Daten werden mit Hilfe des Programms zur Selektion der Daten ausgelesen und dann mittels der Berechnungsprogamme ausgewertet.

Das Selektionsprogramm kann auch in dem frei programmierbaren Speicher abgelegt sein. In diesem Fall enthält der fest programmierte Speicher allerdings einen Programmalgorithmus. Die Berechnungsprogramme dienen beispielsweise der Berechnung des Zündwinkels und von Korrekturfaktoren, die z.B. bei der Kraftstoffeinspritzung berücksichtigt werden.

Auf die Art der Speicherung der Informationen wird im folgenden genauer eingegangen: Zunächst werden in ein, hier mit K bezeichnetes Konstantenfeld Festwerte eingegeben. Diese Werte werden von der Programmiereinrichtung kontrolliert. Falls durch eine defekte Speicherzelle die eingegebenen Werte verfälscht werden, findet ein weiterer Speichervorgang unter einer anderen Speicheradresse statt. Im vorliegenden Beispiel sind mit K1 und K2 Freiplätze vorgesehen, die zum erneuten Speichern von Festwerten verwendet werden können.

Anschließend werden Daten in ein Steuerdatenfeld S eingegeben. Bei Auftreten eines Fehlers findet auch hier ein erneuter Speichervorgang unter einer neuen Speicheradresse statt. Hierfür sind ebenfalls Freiplätze S1 und S2 für das Steuerdatenfeld vorgesehen. Dieses dient der Unterscheidung von Kennlinien und -feldern, die in einem folgenden Speicherschritt eingegeben werden. Wenn eine solche Unterscheidung fürdas Berechnungsprogramm nichterforderlich ist, kann auf das Steuerdatenfeld verzichtet werden.

Sollten bei der Eingabe der Kennlinien und -felder fehlerhafte Speicherzellen gefunden werden, so kann die Eingabe dieser Daten unter einer anderen Speicheradresse wiederholt werden. Auch hier können entsprechende Freiplätze vorgesehen werden.

Die Adressen der Kennlinien bzw. des oder der Kennlinienfelderwerden in einem Vektorfeld V gespeichert, wobei die Adressen so gewählt werden, daß Speicheradressen mit defekten Speicherzellen nicht aufgelistet werden.

Schließlich wird ein Adressenzeiger eingegeben, der die aktuellen Adressen des Konstantenfelds, des Steuerdatenfelds und des Vektorfelds enthält.

Bei der Speicherung des Adreßzeigers wird von einer festen Anfangsadresse ausgegangen, die im Programm zur Selektion der Daten im fest programmierbaren Speicher 7 abgelegt ist Wird beim Speichern des Adreßzeigers eine defekte Speicherzelle ermittelt, so wird der Datensatz an einer Folgeadresse abgelegt. Die Adressen im Adreßzeigerspeicherbereich sind in Gruppen eingeteilt, wobei die Anzahl der Elemente einer Gruppe der Anzahl der zu speichernden Adressen entspricht Im vorliegenden Fall besteht also jede Gruppe aus drei aufeinanderfolgende Adressen.

Durch diesen Speicher aufbau läßt sich beim Auslesen des Adreßzeigers sicherstellen, daß die aktuelle, korrekte Adresse ausgelesen wird:

Zunächst werden die einzelnen Gruppen der Adressen im Adreßzeigerfeld ausgehend von der festen Anfangsadresse mit Hilfe des Selektionsprogramms ausgelesen. Wenn eine Gruppe von freien Adressen aufgefunden wurde, so ist sichergestellt, daß in der unmittelbar vorhergehenden Gruppe der aktuelle Adressensatz gespeichert ist. Wenn also die gültigen Adressen des Adreßzeigers wegen einer defekten Speicherzelle erst in einem zweiten Speichervorgang abgelegt werden, so ist bei diesem Ausleseverfahren sichergestellt, daß die falsche Adresse nicht ausgelesen wird.

Auf diese Weise lassen sich beim Speichern von Daten und Adressen defekte Speicherzellen ermitteln. Im Fehlerfall wird ein Speichervorgang wiederholt. Die Kennungen im Vektorfeld und im Adreßzeiger weisen immer auf den aktuellen Speicherplatz hin.

Aufgrund der klaren, eindeutigen Zuordnung der gespeicherten Informationen und der Kennungen können auch Datensätze und Adressengruppen beliebiger Länge gespeichert werden. Überdies ist es möglich, nachträglich die Datensätze zu ändern. Dazu können neue Daten, beispielsweise Festwerte oder Steuerdaten aber auch Kennlinien und -felder, in beim ersten Speichervorgang freigelassene Freiplätze oder in beliebige, freie Speicherplätze eingegeben werden.

Anschließend wird - bei Änderungen von Kennlinien und -feldern- das Vektorfeld ausgelesen, an die neuen Adressen angepaßt und wieder an neuer Stelle eingegeben. Bleiben bei einer Änderung die Kennlinien und -felder unverändert, so wird auch das Vektorfeld nicht verändert.

Schließlich wird der Adreßzeiger ausgelesen, aktualisiert und in die dem ursprünglichen Adressensatz folgende Adressengruppe eingegeben.

Mit diesem Steuergerät und mit diesem Verfahren können also beliebige, vom Kunden ausgewählte Daten und Adressen in den frei programmierbaren Speicher 6 eingelesen werden, wobei Fehler durch defekte Speicherzellen vermieden werden. Überdies können die gespeicherten Informationen später vom Verwender des Steuergeräts problemlos geändert werden.

Wenn bestimmte Datengruppen häufig abwechselnd ausgewählt werden müssen, beispielsweise, wenn sich die Benzinqualität bei zahlreichen Grenz- übertritten oft ändert, kann die Steuerung auch insoweit geändert werden, als an diese Situation angepaßte verschiedene Datensätze in den frei programmierbaren Speicher eingegeben werden. Die Auswahl der Datensätze kann durch eine Abfrageroutine oder durch ein Schaltorgan getroffen werden. Auf diese Weise wird vermieden, daß bei jeder Datenänderung Speicherplatz verbraucht wird.

## Patentansprüche

1. Verfahren zur Steuerung von Brennkraftrnaschinen in Kraftfahrzeugen mit einer Vorrichtung mit mindestens einem Mikroprozessor (4), mit mindestens einem fest programmierten Speicher (7) zur Aufnahme von Steuerprogrammen und mit mindestens einem frei programmierbaren Lesespeicher (6), wobei der Lesespeicher einen Adresszeiger enthält, der an einer festen Anfangsadresse beginnt,und der Adresszeiger Adressen von Daten, Feldern und/oder Konstanten enthält, die zusammen mit dem Adresszeiger im Lesespeicher abgelegt sind, wobei in einem Aktualisierungsschritt die Adressen und zugehörigen Daten zumindest teilweise durch aktualisierte Adresse und zugehörige Daten ersetzt werden, dadurch gekennzeichnet, daß im Aktualisierungsschritt Adressen des Adresszeigers und zugehörige Daten nur auf freie Speicherplätze eingelesen werden,
daß der Adresszeiger für aktual isierte Daten, Feider und/oder Kennlinien in die dem ursprünglichen Adressensatz folgenden Adressengruppe des Adresszeigers eingelesen werden,
daß durch ein im fest programmierten Speicher (7) abgelegtes Programm die im Adresszeiger gespeicherten Adressen durchsucht werden und daß als aktualisierte Adresszeiger die Adressen genommen werden, die vor den freien Speicherplätzen aufgefunden werden.

2. Verfahren nach Anspruch 1, dadurch gekennzeichnet, daß durch eine Programmiereinrichtung (1) neue Daten, Felder und/oder Kennlinien an freie Speicherplätze eingelesen werden, daß bei einem Fehler beim Einlesen der Daten, Felder und/oder Kennlinien ein weiteres Einlesen auf noch freie Speicherplätze vorgenommen wird und daß als letztes der Adressenzeiger eingegeben wird.

## Claims

1. Method for controlling internal combustion engines in motor vehicles having a device having at least one microprocessor (4) having at least one fixed-programmed memory (7) for receiving control programs and having at least one freely programmable read-only memory (6), the read-only memory containing an address indicator which begins at a fixed initial address and the address indicator containing addresses of data, fields and/or constants which are stored together with the address indicator in the read-only memory, the addresses and associated data being at least partially replaced in an updating step by updated addresses and associated data, characterized in that in the updating step addresses of the address indicator and associated data are only read into free memory locations, in that the address indicator for updated data, fields and/or characteristic curves is read into the address group of the address indicator following the original address set, in that by means of a program stored in the fixed-programmed memory (7), the addresses stored in the address indicator are searched through, and in that the addresses which are found before the free memory locations are taken as updated address indicators.

2. Method according to Claim 1, characterized in that new data, fields and/or characteristic curves are read into free memory locations by means of a programming device (1), in that in the case of an error when reading in the data, fields and/or characteristic curves a further reading into memory locations which are still free is performed and in that the address indicator is finally entered.

## Revendications

1. Procédé de commande de moteur à combustion interne de véhicule automobile comportant un dispositif avec au moins un microprocesseur (4), au moins une mémoire (7) programmée de manière fixe pour recevoir des programmes de commande et au moins une mémoire de lecture (6) librement programmable, la mémoire de lecture comportant un index d'adresses qui commence à une adresse initiale fixe et l'index des adresses contient des données, des champs et/ou des constantes qui sont inscrits ensemble dans la mémoire de lecture avec l'index d'adresses, et au cours d'une étape de mise à jour, les adresses et les données correspondantes sont au moins partiellement remplacées par des adresses actualisées et les données correspondantes, procédé caractérisé en ce qu'au cours de l'étape d'actualisation, on introduit les adresses de l'index d'adresses et les données correspondantes seulement aux emplacements de mémoire libres, l'index d'adresses pour les données actualisées, les champs et/ou les courbes caractéristiques est inscrit dans le groupe des adresses de l'index d'adresses faisant suite au jeu des adresses initial, par un programme inscrit dans une mémoire fixe (7) programmée, on recherche les adresses mises en mémoire dans l'index d'adresses et on prend pour adresses de l'indicateur d'adresses actualisé, les adresses trouvées avant les emplacements de mémoire libres.

2. Procédé selon la revendication 1, caractérisé en ce que par une installation de programmation (1) on introduit de nouvelles données, des champs et/ou des courbes caractéristiques dans des emplacements de mémoire libres et en ce qu'en cas d'erreur, lors de l'introduction des données, des champs et/ou des courbes caractéristiques, on effectue une nouvelle inscription à des emplacements de mémoire encore libres et on introduit ces emplacements comme les derniers des index d'adresses.
